**Europäisches Patentamt**

**European Patent Office**

**Office européen des brevets**

(11) Numéro de publication: **0 296 905**
**A1**

## (12) DEMANDE DE BREVET EUROPEEN

(21) Numéro de dépôt: **88401265.9**

(22) Date de dépôt: **25.05.88**

(51) Int. Cl.⁴: **H 04 Q 7/02**

(30) Priorité: **27.05.87 FR 8707463**

(43) Date de publication de la demande:
**28.12.88 Bulletin 88/52**

(84) Etats contractants désignés:
**AT BE CH DE ES GB GR IT LI LU NL SE**

(71) Demandeur: **G7, Société Anonyme dite**
**22/28 rue Henri Barbusse**
**F-92110 Clichy (FR)**

(72) Inventeur: **Rainsard, Jean-Yves**
**13 rue Filiettes N. Philbert**
**F-92500 Rueil Malmaison (FR)**

(74) Mandataire: **Hirsch, Marc-Roger**
**Cabinet Hirsch 34 rue de Bassano**
**F-75008 Paris (FR)**

(54) **Ensembles de transmission de données entre véhicules et postes fixes.**

(57) Ensemble émetteur-récepteur pour la transmission de son et de données entre au moins un véhicule et au moins un poste fixe, comprenant un équipement émetteur-récepteur radiophonique avec les éléments suivants montés entre ledit émetteur-récepteur et un ensemble de traitement de données, à savoir un interface E/R INTERF directement connecté d'une part à l'équipement émetteur-récepteur radiophonique et d'autre part à un microprocesseur µP lui-même coopérant avec un dispositif de gestion de modem MODEM, un dispositif de traitement et de commutation de signaux SIGN PROC connecté au microprocesseur µP et au MODEM, et un interface LOCAL INTERF avec l'ensemble de traitement de données.

FIG.1

EP 0 296 905 A1

## Description

### ENSEMBLES DE TRANSMISSION DE DONNEES ENTRE VEHICULES ET POSTES FIXES

La présente invention a pour objet des ensembles de transmission de données entre véhicules et postes fixes susceptibles de recourir à des ensembles émetteurs-récepteurs fixes et/ou embarqués, de type classique, pour assurer cette transmission.

Il est actuellement d'usage généralisé notamment dans les compagnies de transport de communiquer essentiellement par radio entre les véhicules et un ou plusieurs centraux. Dans ce qui suit et pour fixer les idées à titre d'exemple, on se référera aux taxis qui représentent un domaine d'application particulièrement adéquat, mais il est évident que l'invention peut s'appliquer à tous types de véhicules qu'ils soient terrestres (routiers ou ferroviaires), maritimes, aériens ou autres.

Or il est d'usage quasi-généralisé actuellement dans la plupart des compagnies de taxis ou organisations équivalentes de communiquer par radio et notamment par radiotéléphonie pour répercuter les appels de la clientèle et répondre à la demande. Il est également d'usage courant lorsqu'un client demande un taxi à une adresse donnée de lancer un appel à tous les taxis de la compagnie pour rechercher celui qui pourra dans les meilleurs délais répondre à l'appel.

Ceci présente plusieurs inconvénients. L'ensemble du réseau est encombré par des appels surtout aux heures de pointe et tous les taxis reçoivent tous les appels même pour des adresses très éloignées de l'endroit où ils se trouvent. Par ailleurs, dans la mesure où il est difficile de repérer en permanence où sont tous les véhicules et où ils seront dans les minutes qui suivent, on peut se trouver avec des situations imprévisibles ou très difficiles à prévoir, par exemple lorsqu'aucun taxi n'est disponible dans une zone à nombre d'appels élevé, ce qui conduit à faire attendre d'autant plus longtemps le client, qu'on ne trouve pas de réponse favorable pour finalement lui faire part de l'indisponibilité des véhicules.

Il devient donc nécessaire de pouvoir obtenir à chaque instant des données permettant de repérer au moins approximativement la position de chaque véhicule, de savoir où se rend chaque véhicule et au moins approximativement à quel moment il y arrivera et sera disponible. Il est évident que dès lors que de telles données sont disponibles, il devient possible dans de nombreux cas, dès l'appel d'un client de pouvoir lui répondre immédiatement qu'un véhicule sera à sa disposition dans un délai donné. Par ailleurs, en recourant pour un certain nombre de zones à des émetteurs-récepteurs à portée relativement réduite, on ne transmet les appels qu'aux véhicules situés dans ladite zone sans perturber l'ensemble du réseau, et sans risque de le saturer en lançant des appels qui ne devraient toucher que les véhicules proches d'une adresse de client et se rendant dans son voisinage dans un délai suffisamment court.

Pour ce faire, la présente invention utilise tout système de radiocommunication classique en phonie pour assurer la transmission de toutes données issues d'un terminal embarqué ou destinées à un tel terminal, tel celui faisant l'objet de la demande de brevet français déposée par la demanderesse, le même jour que la présente demande, sous le titre "terminal embarqué sur véhicule pour traitement, émission et réception de données échangées avec des postes fixes".

Ces systèmes classiques sont perfectionnés et modifiés de la façon suivante:

Un central émetteur-récepteur en communication avec la clientèle correspond par radio avec un certain nombre de stations locales de zone qui réémettent vers les véhicules situés dans cette zone, à portée plus limitée, les appels qui les concernent. Inversement, les réponses reçues des véhicules sont retransmises vers le central. Les émetteurs-récepteurs embarqués et au moins l'émetteur-récepteur ou éventuellement aussi les émetteurs-récepteurs de stations locales sont équipés d'interfaces spéciaux permettant de faire passer par la transmission radiophonique les données échangées entre véhicules et central par l'intermédiaire des stations locales pouvant elles-mêmes assurer tout ou partie du traitement, de l'émission et de la transmission de données. Il est d'ailleurs évident que les dispositifs conformes à l'invention peuvent être utilisés, en ce qui concerne les interfaces mêmes sur des équipements sans stations locales intermédiaires.

Dans ce qui suit, on se limitera, dans la description détaillée de l'interface à l'émetteur-récepteur embarqué pour lequel les problèmes liés à la mise en place sur véhicule imposent de nombreuses contraintes (nécessité d'un volume réduit, travail dans des conditions très variables notamment d'alimentation et de température, de qualité d'émission/réception, indispensable robustesse, simplicité d'emploi). On notera également que si l'on monte à bord un terminal avec clavier, calculateur, mémoires et affichage, on peut y adjoindre divers éléments électroniques pouvant utiliser le même ensemble de traitement et de transmission (vitesse, occupation, sécurité, distances parcourues, prix perçus, consommation, etc.). On peut également prévoir le branchement d'autres périphériques notamment dans le cadre de l'évolution actuelle de l'électronique embarquée et en particulier, cartographie électronique, repérage de position, prévision de signalisation, etc. Il est évident que dès lors que peut s'automatiser le repérage du véhicule sur cartographie mémorisée et affichée, cela peut simplifier d'autant l'intervention du conducteur du véhicule et lui éviter de devoir informer périodiquement station locale et/ou centrale de sa position et de sa destination.

De même, dès lors que la connexion de l'ensemble conforme à l'invention avec le compteur du véhicule est assurée, la transmission de l'état (occupé ou libre), de la distance parcourue et du prix se fait automatiquement sans intervention du conducteur du véhicule dans la transmission des informations.

Pour mieux faire comprendre les caractéristiques techni ques et les avantages de la présente invention, on va en décrire un exemple de réalisation, étant bien entendu que celui-ci n'est pas limitatif quant à son mode de mise en oeuvre et aux applications qu'on peut en faire.

On se référera aux figures suivantes qui représentent schématiquement:

- la figure 1 la disposition d'un ensemble conforme à l'invention;
- la figure 2 un synoptique de système embarqué conforme à l'invention;
- la figure 3 un ensemble de traitement et de commutation de signaux
- la figure 4 un interface avec le réseau local
- la figure 5 le système de gestion du MODEM

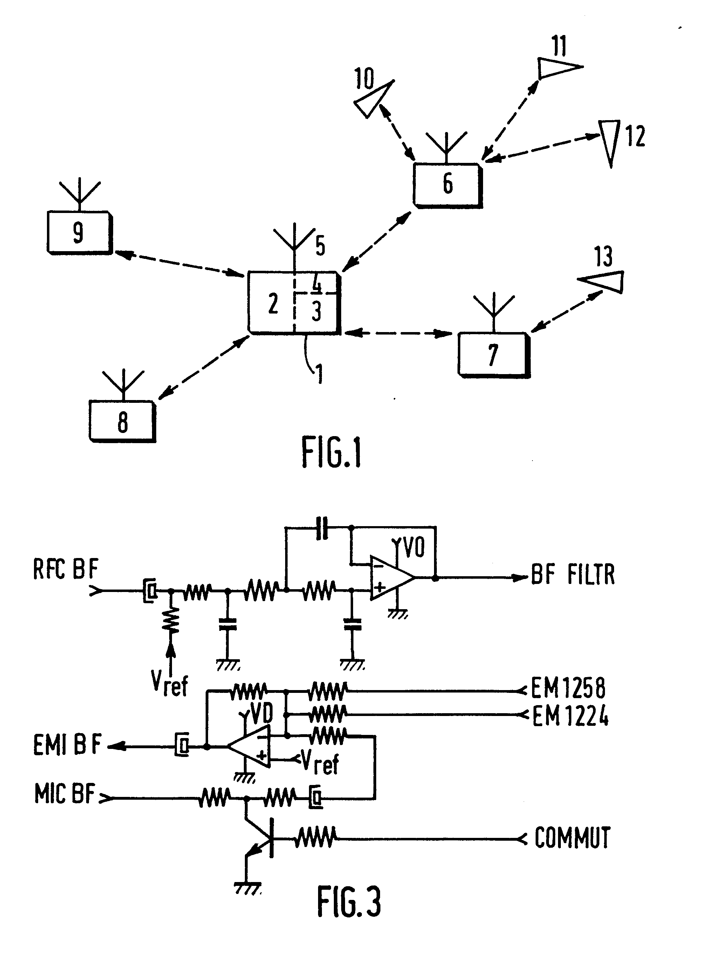

A la figure 1, le central 1 comprend une partie de communication phonique 2 et une partie de traitement de l'information 3, communiquant par l'interface 4 avec l'ensemble émission-réception radiophonique symbolisé par l'antenne 5.

Le central 1 est en communication avec un certain nombre de stations locales de zones 6, 7, 8, 9. On peut assurer ces transmissions soit toutes sur une fréquence unique, soit, plus favorablement, sur des fréquences différentes permettant de ne transmettre à chaque station locale que les informations la concernant et réciproquement. Cette liaison peut se faire par radio mais on peut également la réaliser par câble et notamment par le réseau téléphonique. On peut également utiliser des faisceaux hertziens présentant l'avantage d'être très directionnels.

Chaque station locale 6, 7, 8, 9 assure donc la retransmission entre le central 1 et les véhicules tels que 10, 11, 12, 13. Dès lors que des zones géographiques sont définies à chacune desquelles on attribue une station locale, les véhicules situés dans chaque zone entrent en relation avec la station locale correspondante (ou le central jouant le rôle de station locale pour sa propre zone).

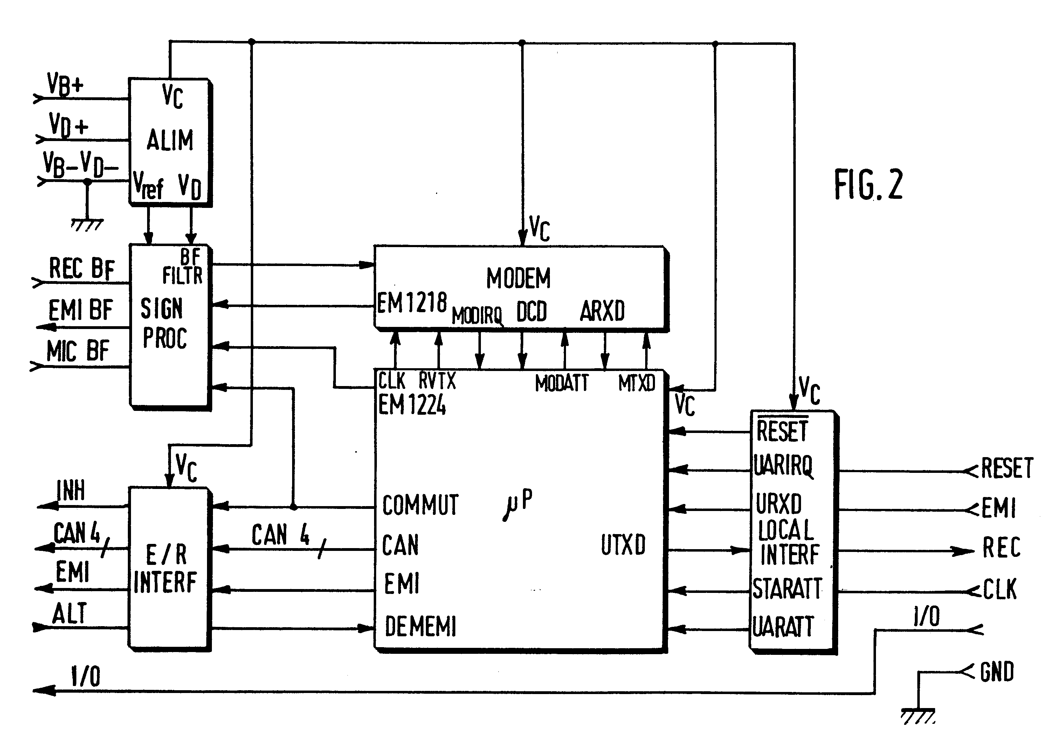

A la figure 2, est représenté schématiquement le synoptique de la partie du système conforme à l'invention assurant la transmission des données entre l'émetteur-récepteur radio phonique d'une part et tout ensemble de traitement de données. L'exemple qui va être décrit plus en détail convient tout particulièrement pour un ensemble embarqué à bord d'un véhicule, c'est-à-dire qu'il peut être aisément associé à un poste radio-émetteur-récepteur classique, voire y être intégré du fait de son faible encombrement et de son adaptation aux conditions de travail très particulières à bord d'un véhicule. Mais il est évident qu'un tel système peut aussi bien être adapté à tout ensemble émetteur-récepteur. Il est donc monté de préférence sur l'un des véhicules (10 à 13, figure 1) et peut être adapté pour être monté sur le central (interface 4) ou sur l'une des stations locales (6 à 9).

Revenant à la figure 2, il s'agit d'un synoptique qui peut correspondre à une simple carte que l'on peut monter dans le poste radiophonique embarqué ou y être au moins associé. En fait, on a généralement intérêt à ne pas intégrer la carte dans le poste radiophonique, ce qui peut éviter des bruits et autres perturbations.

Ce système est essentiellement constitué, par un microprocesseur μP pouvant être une pastille unitaire (monochip) et qui inclut outre les éléments de traitement de l'information proprement dits, les mémoires mortes par exemple de type EPROM et vives RAM, l'horloge et autres constituants désormais classiques de microprocesseur. On reviendra ci-après à propos des figures suivantes à une analyse plus détaillée des composants du synoptique de la figure 2.

Le microprocesseur μP est alimenté ainsi que les autres composants par une source d'alimentation ALIM. Les tensions $V_B+$ et $V_B-$ sont celles fournies par l'équipement embarqué, c'est-à-dire le plus souvent la batterie. Il est évident que ces tensions sont variables dans le temps et que, si le dispositif de la figure 2 était utilisé non sur véhicule mais sur installation fixe, il ne serait pas besoin de tenir compte de ces variations.

Les tensions $V_D+$ et $V_D-$ sont des tensions régulées qui peuvent être fournies par exemple par l'alimentation stabilisée du poste émetteur-récepteur radiophonique.

Comme on le verra ci-après, l'ensemble d'alimentation fournit une tension régulée $V_C$ et une tension de référence $V_{réf}$ en plus de la tension $V_D$ dont l'utilisation sera décrite ci-après.

L'ensemble de la figure 2 comprend un interface E/R INTERF avec le poste émetteur-récepteur radiophonique. Il est chargé, comme cela sera explicité ci-dessous, d'assurer la transmission des signaux à émettre EMI issus du microprocesseur μP vers le poste radio, ainsi que la sélection de canal CAN (par exemple à 4 fils), d'inhiber INH les hauts parleurs de poste pendant la transmission de données non phoniques et de recevoir les signaux de fonctionnement en alternance ALT émetteur/récepteur avec demande d'émission DEMEMI des signaux de données du microprocesseur μP.

Cet interface est alimenté en tension régulée $V_C$ et reçoit les signaux de commutation COMMUT du microprocesseur μP.

Le synoptique de la figure 2 présente également un dispositif de traitement et de commutation des signaux SIGN PROC. Ce dispositif travaille essentiellement sur la basse fréquence à la réception REC BF, à l'émission EMI BF, et en liaison avec le microphone MIC BF. Il est connecté d'une part au dispositif de gestion de MODEM qui sera décrit ci-après et ceci dans les deux sens, et d'autre part au microprocesseur dont il reçoit les signaux de commutation et des signaux digitaux sur lesquels on reviendra ci-après. Il est alimenté en tension de référence V$_{réf}$ et en tension régulée V$_D$ par l'alimentation commune ALIM.

Le synoptique de la figure 2 présente également un interface avec le réseau local LOCAL INTERF qui assure les communications entre le microprocesseur µP et l'ensemble fournissant les signaux à transmettre et affichant et/ou enregistrant les signaux reçus. Alimenté en tension régulée V$_C$, il assure essentiellement les translations de niveau. On reviendra ci-après plus en détail sur les divers types de signaux transitant par cet interface. On notera en passant que, parallèlement aux connexions avec le réseau local, le synoptique de la figure 2 mentionne la simple transmission de commandes marche/arrêt 1/0 et une connexion à la masse.

L'ensemble représenté à la figure 2 comprend également un dispositif de gestion du modulateur-démodulateur radio MODEM. Alimenté également en tension régulée V$_C$, il échange les signaux basse fréquence avec le dispositif SIGN PROC. et avec le microprocesseur µP une série de types de signaux que l'on analysera ci-dessous. Cet ensemble dont le synoptique fait l'objet de la figure 2 assure donc l'émission en basse fréquence à partir du microphone MIC (son) ou du MODEM (signaux), les signaux étant traités sur la porteuse correspondante. A la réception, le son est transmis au haut parleur (ou éventuellement à l'écouteur) et les signaux, via le MODEM au réseau local qui en assure la mise en mémoire et/ou l'affichage. On peut de la sorte traiter et transmettre des signaux numériques et/ou analogiques.

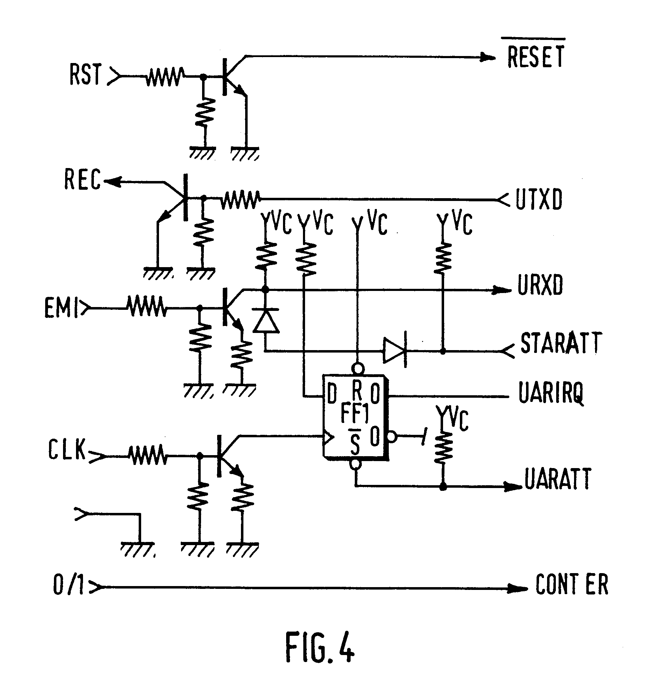

La figure 3 représente le diagramme bloc du microprocesseur SIGN PROC de la figure 2.

Il est essentiellement constitué par un microprocesseur proprement dit de tout type classique incluant mémoire vive RAM et mémoire morte de préférence reprogrammable REPROM associé à deux bascules.

Le microprocesseur µP (fig 2) est constitué par exemple par un circuit intégré HMOS à canal de type N et charge de déplétion tel que le MC 68705 P3 de Motorola à mémoire EPROM, mémoire vive RAM, mémoire morte ROM, horloge CLK entrée/sortie.

Il est connecté de la façon suivante :

1°) alimentation et signaux reçus de l'ensemble de traitement de données via l'interface ci-après décrit :

V$_{cc}$, TIMER et V$_{pp}$     tension V$_c$

RESET     remise à zéro, une capacité étant intercalée entre circuit et masse

PA6     signaux UARIRQ de réception asynchrone de demande d'interruption

PA2     signaux MODIRQ d'identification de la source de demande d'interruption

IRQ     connexion à PA2 et PA6 par diodes pour assurer le "ET" des sources d'interruption

PA7     signaux URXD de données reçues sur la ligne de réception série

PAØ     demande d'émission DEMEMI

PB7     signaux MRXD de données reçues sur la ligne de réception du modem radio

PB6     signaux d'indication de verrouillage de boucle de démodulation

GND     masse

2°) signaux émis :

PA1     signaux MODATT de commande de remise à zéro de la bascule qui engendre les signaux MODIRQ

PA3     signaux UTXD de ligne de émission série

PA4     signaux UARATT de remise à zéro de la bascule engendrant la commande d'interruption UARIRQ

PA5     signaux STARATT définis ci-après

PB2     à travers un ensemble RC signaux EM 1224 binaires de modulation différente (deuxième modulateur radio)

PB0     signaux de commande d'émission

PB1     signaux de commutation COMMUT

## PHONIE/TRANSMISSION DE DONNEES

PCO/PC3     numéro de canal

OSC1, OSC2     L'oscillateur intégré présentant une charge capacitive faible est utilisé pour envoyer au MODEM des impulsions d'horloge à fréquence divisée par quatre pour les deux bascules en cascade

En ce qui concerne l'alimentation ALIM (figure 2) la tension de batterie V$_B$ est régulée pour donner V$_c$ et ceci par tout moyen adéquat.

La tension de référence V$_{ref}$ est obtenue grâce par exemple à un diviseur de potentiel à partir de la tension V$_D$ servant à alimenter les circuits analogiques et obtenue elle-même par exemple à partir de la tension du poste radio.

En ce qui concerne l'interface avec l'émetteur récepteur (E/R INTERF, figure 2) il s'agit d'une simple transmission avec inversions pour les indications de canaux CAN (figure 2) et pour les signaux de commutation COMMUT donnant ainsi les signaux INH d'inhibition de haut parleur.

La commande d'émission EMI peut être effectuée par un système à collecteur ouvert de type Darlington par exemple.

Les signaux d'alternance ALT passent par une diode et un circuit RC pour l'élimination des phénomènes parasites.

La figure 3 représente schématiquement un exemple de réalisation du traitement et de la commutation des signaux (SIGN PROC figure 2).

Les signaux reçus en basse fréquence (REC BF) passent par un filtre passe bas du troisième ordre et sont transmis (BF FILTR) au MODEM.

En ce qui concerne l'émission en basse fréquence EMIBF, elle est effectuée par sommation inversion de trois types de signaux : deux types digitaux (EM 1218 provenant du MODEM et EH 1224 provenant du microprosseur), les premiers étant en mode natif du système, les seconds en mode dégradé. Un type analogique commuté (COMMUT) par le transistor associé à l'entrée du microphone MIC BF.

La figure 4 représente schématiquement l'interface avec le réseau local (LOCAL INTERF figure 2). Il s'agit essentiellement d'un ensemble de translation de niveau.

La réception de l'équipement maître URXD correspond à l'émission du réseau local EMI et l'émission de l'équipement maître UTXD à la réception du réseau local REC.

Selon les signaux STARATT ci-après définis, issus du microprocesseur μP, on recueille à la sortie les signaux UARIRQ ou UARATT.

Ainsi grâce à la bascule recevant les impulsions de l'horloge CLK quand STARATT est à 0, à chaque coup d'horloge, la sortie bascule si UARATT a remis la bascule à zéro.

Quand STARATT = 1 on n'obtient 0 que si D est à zéro. Autrement dit l'horloge n'agit pas tant que rien ne se passe sur la ligne d'émission.

Dès qu'un caractère apparaît, on obtient un déclenchement.

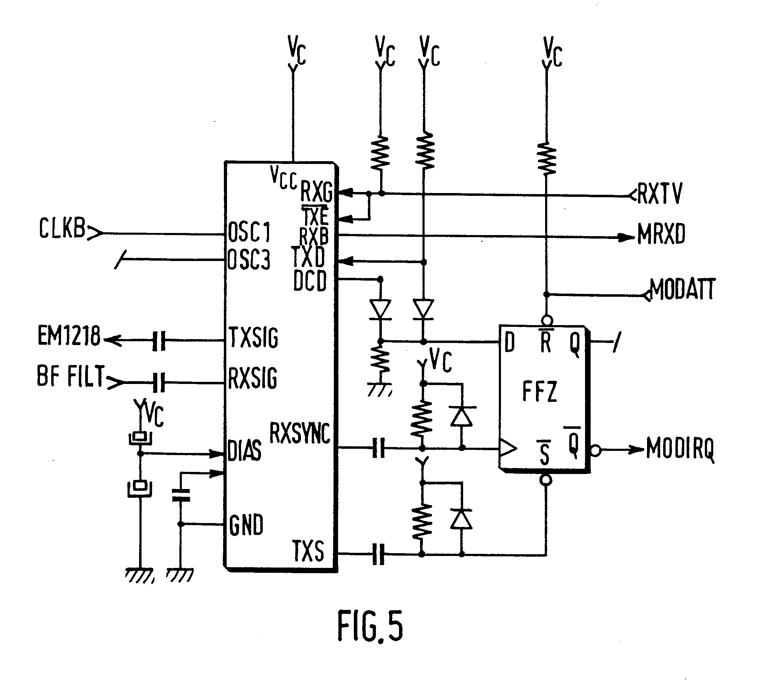

La figure 5 représente schématiquement un exemple de réalisation de l'ensemble de gestion du MODEM radio.

Selon l'exemple illustré par la figure, il se compose essentiellement d'un circuit intégré tel que le MODEM FFSK FX409 produit par ISC qui est un circuit CMOS traitant 1200 bands.

Ce circuit intégré est connecté comme suit :

OSC1     entrée horloge CLK B

TXSIG     émission modulée EM 1218 à travers une capacité

RXSIG     réception modulée BF FILT à travers une capacité

DIAS     alimentation en tension de référence à partir de la tension régulée $V_c$

LIM     constante de temps pour détection de porteuse par capacité à la masse

GND     masse

$V_{cc}$     alimentation en tension régulée $V_c$

RXE et $\overline{TXE}$     réception des signaux RXTX de commande d'émission/réception du modem

RXD     émission des signaux MRXD de données démodulées

TXD     réception des signaux MTXD de données binaires MF

DCD     verrouillage de la boucle de détection

RXSYNC     validation de MRXD

TXS     voir ci-après

Une bascule FF2 est commutée comme suit :

R     MODATT et $V_c$ avec inversion

$\overline{D}$     TXD et DCD à travers deux diodes

CLK     RXSYNC à travers une capacité

$\overline{S}$     TXS à travers une capacité et avec inversion

$\overline{Q}$     émission MODIRQ avec inversion

Ce montage permet d'obtenir des interruptions soit sur le front montant R x 5, soit sur le front descendant T x 5 (selon qu'on retrouve respectivement en réception ou en émission).

On notera que les ensembles conformes à la présente invention et qui fonctionnent en réseau privé permettent d'assurer la gestion de l'utilisation de véhicules et en particulier de taxis.

## Revendications

1.- Ensemble émetteur-récepteur de réseau privé pour la transmission de son et de données entre au moins un véhicule et au moins un poste fixe, comprenant un équipement émetteur-récepteur radiophonique, et un ensemble de traitement de données entre lesquels sont montés un interface directement connecté d'une part à l'équipement émetteur-récepteur radiophonique et d'autre part à un microprocesseur coopérant avec un dispositif de gestion de MODEM, et un interface local, caractérisé par le fait que ce système constitue un système ouvert autour d'un bus local, qu'il comprend un dispositif de traitement et de commutation de signaux SIGN PROC connecté au microprocesseur μP et au MODEM, l'interface local LOCAL/INTERF assurant les translations de niveaux de signaux entre le microprocesseur μP et l'ensemble de traitement de données, signaux qui comprennent les signaux de données à émettre EMI, les signaux de données reçues REC les signaux d'horloge CLK et de remise à zéro RESET.

2.- Ensemble selon la revendication 1, caractérisé par le fait qu'il comprend un dispositif d'alimentation ALIM qui est connecté à l'alimentation du véhicule $\pm V_B$ à l'alimentation à tensions régulée $\pm V_D$ de l'émetteur/récepteur radiophonique et fournit une tension régulée $V_C$ et une tension de référence $V_{REF}$.

3.- Ensemble seon la revendication 2, caractérisé par le fait que la tension régulée $V_C$ alimente le microprocesseur μP, le dispositif de gestion de MODEM, et les interfaces E/R INTERF et LOCAL INTERF.

4.- Ensemble selon l'une des revendications 2 ou 3, caractérisé par le fait que la tension de référence $V_{REF}$ alimente le dispositif de traitement et de commutation des signaux SIG PROC.

5.- Ensemble selon l'une des revendications 1 à 4, caractérisé par le fait que le microprocesseur μP inclut mémoires mortes et vives et est connecté à une bascule FF1 qui commande l'interruption de l'émission/réception phonique quand se présente un signal de donnée.

6.- Ensemble selon l'une des revendications 1 à 5, caractérisé par le fait qu'il est appliqué à des taxis.

0296905

FIG.1

FIG.3

FIG.2

FIG. 4

FIG.5

Office européen
des brevets

**RAPPORT DE RECHERCHE EUROPEENNE**

Numero de la demande

EP 88 40 1265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 177 572 (OKI)<br>* Page 1, lignes 44-60; page 2, lignes 2-63 * | 1,5,6 | H 04 Q 7/02 |
| Y | | 2-4 | |
| Y | US-A-4 614 839 (UMEBAYASHI)<br>* Colonne 4, ligne 66 - colonne 5, ligne 20; colonne 6, ligne 61 - colonne 7, ligne 50 * | 2-4 | |
| X | N.E.C. RESEARCH & DEVELOPMENT, no. 78, juillet 1985, pages 77-82, Tokyo, JP; T. MIZUKAMI et al.: "Mobile data terminal"<br>* Page 77, paragraphe 3 - page 79, paragraphe 3.4 * | 1 | |
| A | DE-A-3 433 900 (SIEMENS)<br>* En entier * | 1 | |
| A | US-A-4 486 624 (MOTOROLA)<br>* Colonne 2, lignes 8-54; colonne 3, ligne 1 - colonne 4, ligne 37 * | 1 | DOMAINES TECHNIQUES RECHERCHES (Int. Cl.4) |
| A | GB-A-2 055 275 (LAUNZEL) | | H 04 Q<br>H 04 B |

Le présent rapport a été établi pour toutes les revendications

| Lieu de la recherche | Date d'achèvement de la recherche | Examinateur |
|---|---|---|
| LA HAYE | 30-08-1988 | GERLING J.C.J. |